(19) Europäisches Patentamt European Patent Office Office européen des brevets

(11) **EP 1 342 337 B1**

(12) **FASCICULE DE BREVET EUROPEEN**

(45) Date de publication et mention de la délivrance du brevet:
**05.08.2009  Bulletin 2009/32**

(21) Numéro de dépôt: **01270976.2**

(22) Date de dépôt: **11.12.2001**

(51) Int Cl.:
*H04L 9/08* (2006.01)

(86) Numéro de dépôt international:
**PCT/FR2001/003920**

(87) Numéro de publication internationale:
**WO 2002/049267 (20.06.2002 Gazette 2002/25)**

(54) **SYSTEME POUR LA TRANSMISSION OPTIQUE SECURISEE DE CODE BINAIRE**

VORRICHTUNG ZUR GESICHERTEN OPTISCHEN ÜBERTRAGUNG EINES BINÄREN KODES

SYSTEM FOR SECURE OPTICAL TRANSMISSION OF BINARY CODE

(84) Etats contractants désignés:
**CH DE GB LI**

(30) Priorité: **12.12.2000  FR 0016134**

(43) Date de publication de la demande:
**10.09.2003  Bulletin 2003/37**

(73) Titulaire: **FRANCE TELECOM**
**75015 Paris (FR)**

(72) Inventeurs:
 • **DURAFFOURG, Laurent**
  **F-39570 Montmorot (FR)**
 • **MEROLLA, Jean-Marc**
  **F-25290 Ornans (FR)**

 • **GOEDGEBUER, Jean-Pierre**
  **F-25115 Pouilley les Vignes (FR)**

(74) Mandataire: **Joly, Jean-Jacques et al**
  **Cabinet Beau de Loménie**
  **158, rue de l'Université**
  **75340 Paris cedex 07 (FR)**

(56) Documents cités:
  **EP-A- 0 877 508**

 • **SMITH G H ET AL: "Technique for optical SSB generation to overcome dispersion penalties in fibre-radio systems" ELECTRONICS LETTERS, IEE STEVENAGE, GB, vol. 33, no. 1, 2 janvier 1997 (1997-01-02), pages 74-75, XP006006937 ISSN: 0013-5194 cité dans la demande**

**Description**

**DOMAINE TECHNIQUE GENERAL.**

La présente invention est relative à un système pour la transmission optique sécurisée de code binaire.

Plus précisément ce dispositif a pour objet d'améliorer un procédé de distribution quantique de clés de cryptage exploitant les bandes latérales de modulation et les propriétés quantiques de la lumière. Le but ultime est de sécuriser une ligne de transmission indépendamment du temps et de la puissance de calcul à la disposition d'un éventuel espion.

En théorie, la confidentialité absolue d'une ligne de transmission est assurée si le signal porteur d'information est crypté par addition, à l'aide d'un opérateur «ou exclusif », d'une clé de cryptage aléatoire. Le code ainsi envoyé est impossible à déchiffrer si cette clé, de même longueur que le message à déchiffrer, n'est utilisée qu'une fois. Toutefois, l'algorithme de cryptage n'a de sens que si la clé partagée par les correspondants légitimes est totalement secrète, propriété impossible à atteindre par des méthodes classiques d'échange de clés.

Les lois de la mécanique quantique offrent la possibilité de résoudre ce problème en assurant une sécurité inconditionnelle à la transmission de la clé de cryptage.

**PRESENTATION DE L'ETAT DE LA TECHNIQUE.**

De nombreux protocoles de partage de clés ont été imaginés en codant chaque bit de la clé sur un état quantique d'un photon.

Le premier en date fut présenté par Bennett et al. dans l'article [1] dans lequel il est proposé un protocole d'échange à 4 états formant deux bases conjuguées, communément appelé « protocole à 4 états » ou « protocole BB84 ». Un second protocole, présenté également par Bennett, communément appelée « protocole à 2 états » ou « protocole B92 », consiste à coder les bits de la clé sur deux états non orthogonaux [2]. Le protocole B92 est toutefois moins sûr que le protocole BB84. Ce point constitue l'un des objets de la présente invention.

Dans ces deux protocoles, l'émetteur (Alice) prépare le photon dans un état quantique choisi aléatoirement parmi les états à disposition. Le récepteur (Bob) analyse chaque état des photons incidents par une mesure quantique. Si un espion (Eve) tente d'écouter la ligne de transmission secrète, il devra réaliser à son tour une mesure quantique sur l'état des photons envoyés par Alice, perturbant ainsi cet état. L'espion introduira inévitablement des erreurs dans la transmission qui pourront être détectées à travers une variation de la statistique des photons reçus par Bob. D'autres schémas d'échange plus complexes basés sur la transmission par photon EPR (Einstein, Podolsky, Rosen) ou sur le codage à 3 états ont été développés.

Trois techniques ont été proposées pour préparer le photon dans les états quantiques requis. Les deux premières permettent d'utiliser le protocole BB84 ; la troisième ne le permet pas dans l'état de l'art actuel.

- Une première technique consiste à utiliser l'état de polarisation du photon [3]. A l'émission, le bit « 1 » peut être représenté par une polarisation verticale ou circulaire droite alors qu'un bit « 0 » peut être représenté par une polarisation horizontale ou circulaire gauche. A la réception, Bob choisi aléatoirement et indépendamment d'Alice, la base dans laquelle il analyse le photon incident. La détection du photon indique la valeur du bit envoyé.
- La seconde méthode [4] est décrite par le brevet N˚ US 5 307 410 et utilise un retard optique pour coder l'information. Alice et Bob utilisent des interféromètres à fibre déséquilibré pour introduire ou mesurer ce retard optique. Chaque bit est représenté aléatoirement par deux valeurs du retard optique. Ce système exploite ainsi les propriétés de l'interférence à un photon dans le domaine temporel. Chaque interféromètre possède sur l'un de ses bras un déphaseur optique permettant la transmission de la clé. Les impulsions se propageant dans les deux bras de l'interféromètre et n'ont pas la même intensité : ainsi à la sortie du premier interféromètre, on observe deux impulsions séparées d'un retard $\Delta$t. L'impulsion dite de référence est celle d'intensité classique. L'autre impulsion, dite impulsion signal, contenant en moyenne moins d'un photon a subi un déphasage contrôlé par Alice. A la sortie du deuxième interféromètre on observe trois impulsions. La première est d'intensité négligeable. Elle provient de l'impulsion signal de nouveau atténuée. La seconde est la superposition de la première impulsion signal retardée (mais pas atténuée) et de l'impulsion de référence atténuée et déphasée par Bob. L'intensité de la deuxième impulsion dépend donc à la fois du déphasage introduit par Bob et Alice. C'est elle qui est utilisée pour obtenir une clé de cryptage. La dernière impulsion est la partie de l'impulsion de référence qui a été encore retardée et dont l'intensité est constante. Elle sera utilisée pour déterminer si la ligne a été espionnée.
- Dans une troisième technique [6], qui a fait l'objet d'une demande de brevet français N˚ 97 05573 et d'une demande de brevet européen N˚ EP 0 877 508 A1, Alice code chaque bit de la clé sur une fréquence optique dont la phase $\Phi_A$ est choisie aléatoirement entre 2 valeurs. Bob module la lumière à la même fréquence avec une seconde phase $\Phi_B$ choisie indépendamment d'Alice. En exploitant les propriétés d'interférence à un photon dans les bandes latérales de modulation, Bob est capable de retrouver l'état quantique des photons incidents. Ce procédé de transmission permet notamment d'utiliser des composants électro-optiques standards. Il est compact, ce qui minimise les effets des instabilités externes. Ainsi, il peut être installé sur un réseau standard.

Les techniques précédentes présentent cependant plusieurs inconvénients.

Pour la première technique, il faut rigoureusement conserver la polarisation pendant toute la transmission. Pour résoudre ce problème il faut des fibres à maintien de polarisation, mais de telles fibres ne sont pas installées sur les réseaux existants. La seconde solution envisageable est de contrôler la polarisation le long de la transmission. Cette solution complique énormément le système car il faut régulièrement contrôler la fluctuation de polarisation, ce qui a pour conséquence de diminuer le débit de la clé.

Pour la deuxième technique, les systèmes de distribution reposant sur cette méthode ont un couple d'interféromètres (émetteur/récepteur) dont les bras sont longs. La difficulté est de maintenir constant le retard entre les deux bras avec une grande précision en dépit des instabilités thermiques et mécaniques.

Pour la troisième technique, seul le protocole B92 à 2 états peut être exploité avec la configuration proposée (contrairement aux deux premières techniques qui utilisent le protocole à 4 états BB84). Or, le protocole à 2 états est moins sûr que le protocole à 4 états. En d'autres termes, le degré de confidentialité de la transmission est moins élevé que celui obtenu avec le protocole BB84, lequel garantit en principe une sécurité infinie.

**PRESENTATION DE L'INVENTION.**

L'invention propose de pallier ce dernier inconvénient majeur et d'améliorer le dispositif décrit dans le document FR 97 05573 pour lui permettre d'utiliser le protocole à quatre états.

L'invention propose donc un système de transmission optique de code binaire comportant un émetteur, un récepteur et une ligne de transmission qui s'étend entre ledit émetteur et ledit récepteur,

l'émetteur comportant :

- des moyens pour la génération d'un faisceau lumineux modulé en amplitude qui fait apparaître pour ledit faisceau lumineux un mode central, ainsi qu'un premier et un deuxième mode latéral,
- des moyens de déphasage pour imposer à la modulation un déphasage qui est fonction du code binaire à transmettre,
- des moyens pour atténuer l'intensité du faisceau lumineux modulé de telle sorte que l'intensité des modes latéraux soit suffisamment faible pour qu'il n'existe au maximum qu'un seul photon par impulsion dans les modes latéraux,

le récepteur comportant :

- des moyens pour moduler le signal lumineux reçu par une modulation synchrone avec la modulation à l'émission en l'absence de déphasage,
- des moyens pour imposer à cette modulation un déphasage aléatoirement choisi égal à l'une ou l'autre des valeurs de déphasage susceptibles d'être imposées à l'émission,
- des moyens pour détecter la présence d'un photon dans les modes latéraux après modulation du signal lumineux reçu,

**caractérisé en ce que**

- les moyens de déphasage de l'émetteur impose un déphasage qui est choisi aléatoirement égal à 0 ou $\pi/2$ pour une première valeur de bit ou à $\pi$ ou $3\pi/2$ pour une deuxième valeur de bit,

et en ce que

- les moyens de détection du récepteur comportent des moyens pour détecter la présence d'un photon dans le premier mode latéral, ainsi que des moyens pour détecter la présence d'un photon dans le deuxième mode latéral, une première valeur de bit étant détectée lorsque la présence d'un photon est détectée pour le premier mode latéral, une deuxième valeur de bit étant détectée lorsque la présence d'un photon est détectée pour le deuxième mode latéral.

L'invention est avantageusement complétée par les éléments suivants, pris seuls ou en une quelconques de leur combinaison possible :

- l'émetteur comporte,

- une source lumineuse pour générer un faisceau lumineux d'intensité et de pulsation ($\omega_0$) données,
- des moyens pour produire un premier signal électrique de modulation d'amplitude,
- des moyens aptes déphaser ce premier signal électrique de modulation d'une phase ($\Phi_A$),
- des moyens pour moduler le faisceau lumineux par ce premier signal électrique déphasé,

et le récepteur comporte,

- des moyens pour produire un second signal électrique de modulation,
- des moyens pour donner à ce second signal électrique de modulation une seconde phase ($\Phi_B$) choisie aléatoirement et indépendamment de ($\Phi_A$),
- des moyens pour moduler le faisceau lumineux reçu par le signal électrique modulé.

- les moyens de détection de chaque sortie comportent des moyens formant filtre et un photodétecteur à un photon.
- les moyens formant filtre comportent un spectromètre de type Fabry-Pérot.
- les moyens atténuateur atténuent l'intensité lumineuse du faisceau modulé pour qu'il n'y ait en moyenne pas plus de 0.1 photon par impulsion dans chaque monde latéral de modulation.
- le système comporte en outre des moyens permettant de mettre en synchronisme les deux signaux électriques de modulation.
- l'émetteur et le récepteur fonctionnent de façon indépendante

## PRESENTATION DES FIGURES.

D'autres avantages et caractéristiques ressortiront de la description qui suit, qui est purement illustrative et nullement limitative. Elle doit être lue en regard des dessins annexés, sur lesquels,

- la figure 1 représente un schéma de principe d'un système de transmission quantique basée sur la génération de BLU (bande latérale unique).
- la figure 2 montre le spectre en amplitude obtenu à la sortie du premier modulateur.
- la figure 3 présente le spectre en amplitude résultant de la modulation réalisée avec le second modulateur indépendamment du premier.
- la figure 4 donne les spectres en intensité de la lumière après la traversée des deux modulateurs.

  - la figure 4(a) représente le spectre en intensité pour un DEPHASAGE $|\Phi_A-\Phi_B|=0$,
  - la figure 4(b) représente le spectre en intensité pour un DEPHASAGE $|\Phi_A-\Phi_B|=\pi$,
  - la figure 4(c) représente le spectre en intensité pour un DEPHASAGE $|\Phi_A-\Phi_B|=\pi/2$.

- la figure 5 est une représentation du système de transmission de clés avec deux modulateurs électro-absorbant. Ce système est un premier mode de réalisation de l'invention.
- la figure 6 est montre schématiquement un mode de réalisation du système de transmission quantique de clés avec un modulateur électro-absorbant et un modulateur Mach-Zehnder. -la figure 7 représente les densités spectrales de puissance expérimentales obtenues avec un interféromètre Fabry-Pérot en balayage pour différentes valeurs du déphasage relatif $\Delta\Phi$ entre Alice et Bob.

  - sur la figure 7 (a), Alice et Bob sont en opposition de phase.
  - sur la figure 7 (b), Alice et Bob sont en quadrature de phase.
  - sur la figure 7 (c), Alice et Bob sont en phase.

- la figure 8 est une représentation du système de transmission quantique de clé avec deux modulateurs Mach-Zehnder.
- la figure 9 représente les densités spectrales de puissance expérimentales obtenues avec un interféromètre Fabry-Pérot en balayage pour différentes valeurs du déphasage relatif $\Delta\Phi$ entre Alice et Bob (0, $\pi/2$ et $\pi$).
- la figure 10 montre le nombre de coups induits par la présence de photons dans les bandes latérales de modulation en fonction du déphasage relatif $\Delta\Phi = |\Phi_1 - \Phi_2|$ lorsque celui-ci varie entre $-\pi$ et $\pi$.

**DESCRIPTION D'UN OU PLUSIEURS MODES DE MISE EN OEUVRE ET DE REALISATION.**

Rappels sur le principe du protocole de distribution.

Le partage d'une clé commune secrète entre Alice et Bob comporte trois étapes consécutives qui garantissent la sécurité absolue de la clé :

(i) A l'émission, Alice envoie une séquence de photons en choisissant de manière aléatoire l'état quantique dans lequel chaque photon est préparé. La correspondance entre chaque valeur d'un bit et chaque état quantique est publiquement connue.
(ii) A la réception, Bob décide de mesurer au hasard et indépendamment d'Alice l'état du photon incident.
(iii) Après la transmission quantique, Alice et Bob divulguent sur un canal public les bases dans lesquelles les photons ont été préparés sans pour autant donner la valeur des bits reçus. Cet échange permet d'écarter les mesures non concluantes effectuées par Bob. Nous entendons par mesures non concluantes, celles qui ne permettent pas de connaître avec certitude l'état du photon incident sur le récepteur de Bob. Dans un cas idéal, à l'issue de l'échange public, Alice et Bob partagent une clé brute complètement secrète. Dans les conditions réelles de transmission, la clé de cryptage contient des erreurs dues au bruit du canal et à la présence éventuelle d'un espion. Une procédure de détection et de correction d'erreurs ainsi qu'un processus d'amplification de la confidentialité viennent alors compléter la transmission quantique.

Le protocole 4 états.

Le système proposé exploite le protocole à 4 états présenté par Bennett et al (BB84). Ce protocole se déroule comme suit :

- A l'émission, Alice choisit quatre états quantiques $\{|u\rangle, |\overline{u}\rangle, |v\rangle, |\overline{v}\rangle\}$ qui représentent respectivement les bits {1, 0, 1, 0}. Les états quantiques choisis respectent les conditions suivantes :

$$\langle \overline{u} | u \rangle = \langle \overline{v} | v \rangle = 0, \langle u | u \rangle = \langle v | v \rangle = \langle \overline{u} | \overline{u} \rangle = \langle \overline{v} | \overline{v} \rangle = 1 \qquad (1)$$

$$\langle \overline{u} | v \rangle^2 = \langle \overline{v} | u \rangle^2 = \langle \overline{v} | \overline{u} \rangle^2 = \langle u | v \rangle^2 = \frac{1}{2} \qquad (2)$$

L'équation 1 indique que les bases $\{|u\rangle, |\overline{u}\rangle\}$ et $\{|v\rangle, |\overline{v}\rangle\}$ forment deux bases orthonormées. L'équation 2 indique que les deux bases sont conjuguées.
A la réception; Bob choisit au hasard et indépendamment d'Alice la base dans laquelle il effectue une mesure quantique. Deux cas se présentent à lui :

(i) Bob a utilisé la même base de mesure que celle de préparation. La mesure est alors déterministe et il connaît sans équivoque la valeur du bit transmis.
(ii) Bob a utilisé la base conjuguée à celle de préparation. La mesure donne un résultat aléatoire. La probabilité de conclure à un bit « 1 » ou à un bit « 0 » est alors équiprobable. La mesure est donc non concluante.

- Lorsque la transmission des photons est terminée, Bob divulgue à Alice, par un canal public la base de mesure pour chaque photon reçu. Le résultat de la mesure reste naturellement secret. Alice et Bob éliminent par cette méthode tous les résultats non concluants. Finalement, ils partagent une séquence aléatoire de bits qui pourra être utilisée comme clé de cryptage.

Si un espion, Eve, tente d'écouter la ligne de transmission quantique, elle effectuera le même type de mesure que Bob. Eve n'a alors qu'une chance sur deux de choisir la même base qu'Alice et obtenir un résultat concluant. De plus, elle devra renvoyer le photon prélevé si elle ne veut pas être détectée. D'après la théorie de la mesure quantique, le photon se trouvera dans le même état quantique que l'état initial si Eve a utilisé la bonne base. Dans le cas contraire, l'espion a 50 % de chance de renvoyer le photon dans un mauvais état quantique. Alice et Bob comparent publiquement une partie des bits échangés (séquence de bits sacrifiée) afin de tester la ligne quantique. Eve sera ainsi détectée par les erreurs qui sont générées par sa présence.

Description d'un exemple général de système.

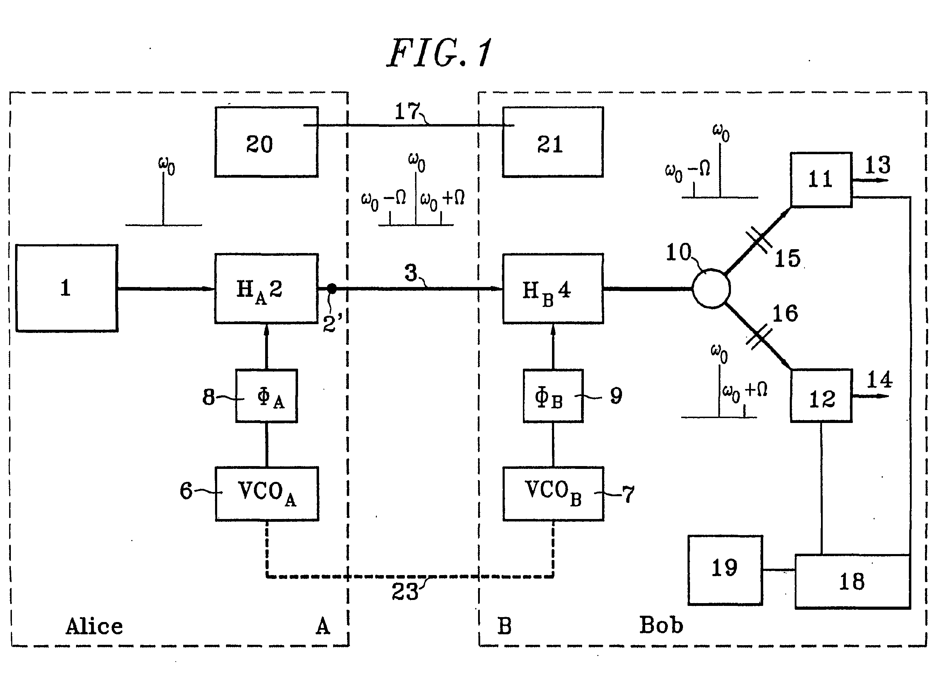

La figure 1 décrit le dispositif général de transmission réalisant le protocole rappelé ci-dessus. Il comporte :

A) un émetteur (Alice) qui comporte :

- une source de photons 1 qui peut être une diode laser fortement atténuée et dont le spectre est centré sur une fréquence optique $\omega_0$.
- un générateur de fréquence $VCO_A$ 6 qui délivre un signal électrique de la forme $V'_A = m \cos \Omega t$.
- un déphaseur 8 qui permet de déphaser le signal $V'_A$ d'une phase $\Phi_A$ pour donner à sa sortie un signal de commande $V_A = m \cos(\Phi t + \Phi_A)$ qui est appliqué sur l'élément de modulation 2 ; ce déphaseur est lui-même commandé par les bits de la clé à transmettre suivant le protocole :

$$\text{bit 1}: \Phi_A = 0 \text{ ou } \pi/2$$

$$\text{bit 0}: \Phi_A = \pi \text{ ou } 3\pi/2,$$

Les valeurs de $\Phi_A$ étant choisies aléatoirement entre 0 et $\pi/2$ pour le bit 1 et entre $\pi$ et $3\pi/2$ pour le bit 0.

- un dispositif de modulation 2 dont l'expression de la courbe de modulation en amplitude est $H_A$. Cette modulation fait apparaître dans le faisceau lumineux deux bandes latérales de modulation $\omega_0 \pm \Omega$.
- un atténuateur qui permet d'atténuer le faisceau lumineux de telle sorte qu'il n'y ait qu'un seul photon dans les bandes latérales.

B) un récepteur (Bob) qui comporte :

- un générateur de fréquence $VCO_B$ 7 qui délivre un signal électrique de la forme $V'_B = m \cos \Omega t$.
- un déphaseur 9 qui permet de déphaser le signal $V'_B$ d'une phase $\Phi_B$ pour donner à sa sortie un signal de commande $V_B = m \cos(\Omega t + \Phi_B)$ qui sert de signal de commande pour l'élément de modulation 4, la phase $\Phi_B$ étant choisie aléatoirement et indépendamment d'Alice entre 0 et $\pi/2$ . .
- un second dispositif de modulation 4 dont l'expression de la courbe de modulation en amplitude est $H_B$.
- des moyens 10 de séparation optique du faisceau lumineux issu de l'élément 4 de façon à obtenir deux sorties.
- des éléments de filtrages 15 et 16 qui permettent de séparer optiquement chacune des deux latérales de modulation, de façon à obtenir sur chaque sortie du dispositif une bande latérale unique $\omega_0 + \Omega$ ou $\omega_0 - \Omega$.
- deux photodétecteurs 11 et 12 sur chacune des sorties 13 et 14 respectivement, recevant chacune des bandes latérales. Les signaux délivrés par chacun des photodétecteurs dépendent de la différence de phase $|\Phi_A - \Phi_B|$ et sont complémentaires l'un de l'autre :

  le bit 1 est obtenu quand un photon est détecté à la sortie 13,
  le bit 0 est obtenu quand un photon est détecté à la sortie 14,

- des moyens pour transmettre les photons 3, par une fibre optique,
- des moyens pour synchroniser les générateurs de fréquences $VCO_A$ et $VCO_B$ 23.

Alice et Bob possèdent tous les deux, des moyens 20 et 21 pour communiquer entre eux, par un canal public 17,
[0024] L'expéditeur communique par ce canal à l'expéditeur quelles phases il a utilisé sans révéler sur quel photodétecteur les photons ont été détectés.

<u>Principe de fonctionnement.</u>

Les intensités des bandes latérales de modulation ainsi créées après Bob varient de façon complémentaire en fonction du déphasage induit entre Alice et Bob si $H_A$ et $H_B$ respectent une condition nécessaire mais suffisante donnée. L'expression de cette condition est détaillée dans la description ci-après. Cette dernière est donnée à titre d'illustration sur un exemple où les courbes de modulation $H_A$ et $H_B$ présentent des fronts de montée et de descente linéaires, afin de simplifier la description mathématique. Ce cas de figure, qui correspond physiquement au cas de « petits signaux », permet d'utiliser un développement limité au premier ordre, et n'est en rien limitatif. Les courbes de modulation peuvent aussi présenter des fronts non linéaires.

La source 1 est une diode laser quasi monochromatique de fréquence $\omega_0$. On notera que cette source peut être impulsionnelle ; dans un autre mode de réalisation, elle peut être continue ; elle peut être monofréquence ou quasi monochromatique. L'amplitude du signal s'écrit comme suit :

$$E_0(t) = |E_0| e^{j\omega_0 t} \qquad (3)$$

- L'émetteur d'Alice 2 est constitué d'un système de modulation de la lumière dont la courbe de modulation $H_A$ en amplitude est de la forme au premier ordre :

$$H_A(V_A) \approx \frac{1}{2}(1 + K_A V_A) \qquad (4)$$

$K_A$ est le coefficient électro-optique caractérisant le composant utilisé. $V_A$ est le signal électrique de commande, de faible amplitude, et de fréquence $\Omega$. Il est généré par l'oscillateur local $VCO_A$. Ce signal est déphasé d'une phase $\Phi_A$ par rapport à la fréquence centrale $\omega_0$: $V_A = m\, cos(\Omega t + \Phi_A)$. La constante $K_A$ s'exprime de façon générale comme suit :

$$K_A = K \exp j\psi_A \qquad (5)$$

Le signal optique après l'émetteur, notée $E_A(t)$, est alors constitué de la fréquence centrale $\omega_0$ et de deux bandes latérales de modulation $\omega_0 - \Omega$ et $\omega_0 + \Omega$ déphasées de $\Phi_A$ par rapport à $\omega_0$ comme le montre l'équation 6 :

$$E_A(t) \approx |E_0| \exp j\omega_0 t \left[ 1 + \frac{Km}{2}\exp j\psi_A \times \exp j(\Omega t + \Phi_A) \right.$$
$$\left. + \frac{Km}{2}\exp j\psi_A \times \exp{-j(\Omega t + \Phi_A)} \right]$$

$$(6)$$

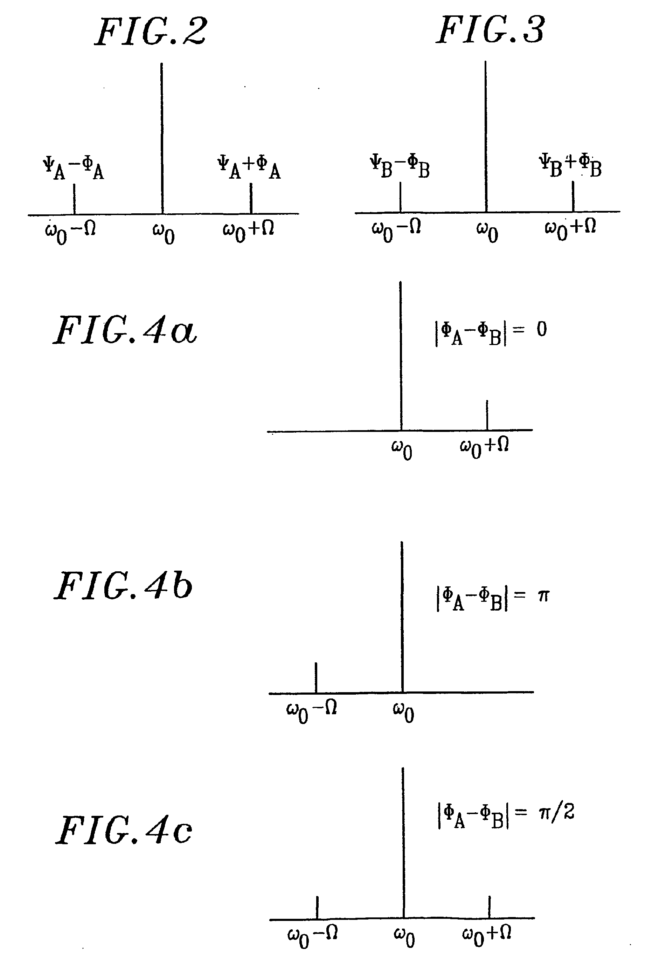

Ainsi, à la sortie du premier modulateur, on obtient une bande de modulation $\omega_0 + \Omega$ avec une phase $\psi_A + \Phi_A$, et l'autre bande de modulation $\omega_0 - \Omega$ avec une phase $\psi_A - \Phi_A$ (Fig. 2).

- Le récepteur 3 de Bob est constitué d'un second système de modulation de la lumière. Ce dernier possède une courbe de modulation en amplitude $H_B$ dont le développement au premier ordre s'écrit:

$$H_B(V_B) \approx \frac{1}{2}(1 + K_B V_B) \qquad (7)$$

$K_B$ est le coefficient électro-optique caractérisant le composant utilisé. $V_B$ est le signal électrique de commande, de même amplitude et de même fréquence $\Omega$ mais déphasé de $\Phi_B$ : $V_B = m\ cos(\Omega t + \Phi_B)$. La constante $K_B$ s'exprime de façon générale comme suit :

$$K_B = K \exp j \psi_B \qquad (8)$$

Le second modulateur fonctionne suivant les mêmes principes que le premier.

La figure 3 montre les deux bandes latérales de modulation générées. Les phases sont $\psi_B + \Phi_B$ pour la bande $\omega_0 + \Omega$ et $\psi_B - \Phi_B$ pour la bande $\omega_0 - \Omega$.

Lorsque les deux modulateurs fonctionnent simultanément, l'amplitude $E_B(t)$ du signal à la sortie de ce second modulateur est composée de la fréquence centrale $\omega_0$ et des bandes latérales de modulation. Leur intensité dépend du déphasage relatif $\Delta\Phi = |\Phi_A - \Phi_B|$ :

$$E_B(t) \approx \frac{|E_0| \exp j\omega_0}{4} \left[ 1 + \frac{Km}{2} \exp j\Omega t \times \left( \exp j\psi_B \exp j\Phi_B + \exp j\psi_A \exp j\Phi_A \right) \right.$$
$$\left. + \frac{Km}{2} \exp - j\Omega t \times \left( \exp j\psi_B \exp - j\Phi_B + \exp j\psi_A \exp - j\Phi_A \right) \right] \qquad (9)$$

La densité spectrale de puissance à la sortie de système d'analyse de Bob est donc composée de la fréquence centrale et de 2 bandes latérales de modulation à $\omega_0 \pm \Omega$ avec les intensités :

$$I \approx \frac{|E_0|^2}{16} \qquad (10)$$

$$i_{\omega_0 + \Omega} \approx \frac{K^2 m^2 |E_0|^2}{32} \left( 1 + \cos\left( \Phi_B - \Phi_A + \psi_B - \psi_A \right) \right) \qquad (11)$$

$$i_{\omega_0 - \Omega} \approx \frac{K^2 m^2 |E_0|^2}{32} \left( 1 + \cos\left( \Phi_B - \Phi_A - \psi_B + \psi_A \right) \right) \qquad (12)$$

La figure 4 montre que les intensités des bandes latérales de modulation dépendent de la différence relative de phase $|\Phi_A - \Phi_B|$. Les intensités $i_{\omega 0 + \Omega}$ et $i_{\omega 0 - \Omega}$ seront complémentaires si les courbes de transfert $H_A$ et $H_B$ en amplitude respectent la condition :

$$\psi_B - \psi_A = \frac{(2k+1)\pi}{2}, \ \forall k \in N \text{ et pour tout déphasage } |\Phi_A - \Phi_B| \quad (13)$$

Dans ce cas, les intensités s'écrivent simplement :

$$i_{\omega_0+\Omega} \approx \frac{K^2 m^2 |E_0|^2}{16} \cos^2\left[(\Phi_B - \Phi_A)/2\right] \qquad (14)$$

$$i_{\omega_0-\Omega} \approx \frac{K^2 m^2 |E_0|^2}{16} \sin^2\left[(\Phi_B - \Phi_A)/2\right] \qquad (15)$$

Quand Alice et Bob sont en phase, la bande latérale de modulation $\omega_0+\Omega$ est maximale alors que l'autre bande $\omega_0+\Omega$ est nulle (il y a donc la création d'une BLU à $\omega_0+\Omega$). Quand Alice et Bob sont en quadrature, les deux bandes de modulation sont présentes avec une intensité deux fois plus faible que l'intensité maximale. Quand Alice et Bob sont en opposition de phase, la bande latérale de modulation $\omega_0-\Omega$ est maximale alors que l'autre bande $\omega_0+\Omega$ est nulle (il y a création d'une BLU à $\omega_0+\Omega$).

Après Bob, un système de filtrage spectral, par exemple deux interféromètres de Fabry-Pérot, permet de séparer les deux bandes latérales de modulation et de les diriger vers deux sorties 1 et 2 distinctes : la bande $\omega_0+\Omega$ sur la sortie 1 et la bande $\omega_0-\Omega$ sur la sortie 2. Un détecteur est ensuite placé à chaque sortie.

En régime quantique, Alice atténue fortement le faisceau derrière son système de modulation afin d'obtenir environ 0,1 photon par impulsion dans chaque bande latérale de modulation. Cette technique permet alors de générer un photon toutes les dix impulsions et limite le nombre d'impulsions susceptibles d'en posséder plus d'un. Selon la théorie quantique de la mesure, nous pouvons alors traduire les équations 11-15 en terme de probabilité de détecter un photon dans une des bandes latérales de modulation.

Déroulement d'une transmission.

La transmission se déroule comme suit :

Les bases utilisées par Alice sont les suivantes : $\{0,\pi\}$ et $\{\pi/2,3\pi/2\}$ . Elles possèdent les propriétés décrites dans les équations 1 et 2. Alice choisit une phase $\Phi_A$ et envoie le photon à Bob.

Bob choisit aléatoirement et indépendamment d'Alice la valeur de la phase $\Phi_B$ entre 0 et $\pi/2$ pour réaliser sa mesure. D'après les équations 14 et 15, cette mesure mène à trois résultats possibles :

$\Delta\Phi$=0 et le photon sera détecté à la sortie 1. Cette sortie correspond au bit 1.
$\Delta\Phi$=$\pi$ et le photon sera détecté à la sortie 2. Cette sortie correspond au bit 0.
$\Delta\Phi$=$\pi/2$ et le photon sera détecté soit à la sortie 1 soit à la sortie 2 avec la même probabilité. Le résultat est indéterminé.

Le protocole de transmission est résumé dans le tableau 1. Le point d'interrogation désigne une mesure indéterminée.

Tableau 1.

| Phase choisie par Alice | 0 | | $\pi$ | | $\pi/2$ | | $3\pi/2$ | |
|---|---|---|---|---|---|---|---|---|
| Bit envoyé par Alice | 1 | | 0 | | 1 | | 0 | |
| Phase choisie par | 0 | $\pi/2$ | 0 | $\pi/2$ | 0 | $\pi/2$ | 0 | $\pi/2$ |
| Sorties activées | 12$^{(1)}$ | ? | (12$^2$) | ? | ? | 12$^{(1)}$ | ? | (12$^2$) |
| Comparaison publique | 1 | ? | 0 | ? | ? | 1 | ? | 0 |

Toute paire de systèmes de modulation dont les courbes de modulation en amplitude sont décrites par les équations 4 et 7, et dont les arguments respectent la relation de phase donnée dans l'équation 13, peut être utilisée pour réaliser une transmission quantique de clés de cryptage sur le schéma de la BLU. Ainsi, trois modes de réalisation du dispositif de transmission quantique utilisant la génération de BLU peuvent être décrits. On peut évidemment en imaginer d'autres. Les exemples qui suivent ne sont nullement limitatifs.

Premier mode de réalisation préféré.

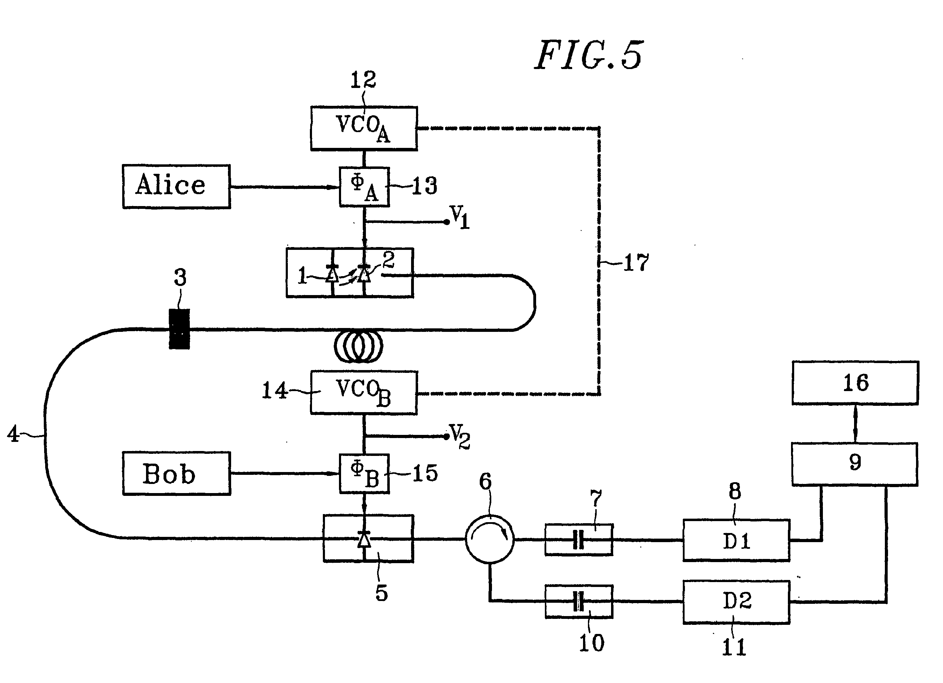

La figure 5 représente un premier mode de réalisation utilisant deux modulateurs électro-absorbants.

La source 1 est une diode laser DFB (Distributed FeedBack selon la terminologie anglo-saxonne), émettant à 1550 nm, de fréquence centrale notée $\omega_0$. Sa largeur spectrale est égale à 30 MHz. Le système d'émission d'Alice est un modulateur électro-absorbant 2, de bande passante égale à 2,5 Gbits/s, commandé par un signal électrique sinusoïdal de fréquence $\Omega$ de 2,5 GHz. Ce signal est généré par un oscillateur local $VCO_A$ 12 dont la phase $\Phi_A$ est fixée aléatoirement par un déphaseur 13 parmi 4 valeurs $(0,\pi)$ ou $(\pi/2,3\pi/2,)$. Les valeurs 0 et $\pi/2$ code le bit 1 alors que les valeurs $\pi$ et $3\pi/2$ codent le bit 0.

Alice atténue ensuite le faisceau de manière à obtenir 0,1 photon par impulsion en moyenne pour chaque bande latérale de modulation à l'aide d'un atténuateur calibré 3.

Le canal de transmission 4 est une fibre optique monomode à 1550 nm de 30 km de long.

Le système de modulation de Bob est identique à celui d'Alice. Il est formé d'un modulateur électro-absorbant 5, commandé par un second oscillateur local $VCO_B$ 14. Le signal électrique est généré à la même fréquence $\Omega$ mais avec une phase égale à $\Phi_B$ dont la valeur peut être choisie aléatoirement et indépendamment d'Alice entre 0 et $\pi/2$ par un déphaseur 15. Le point de fonctionnement de chaque modulateur est fixé par une tension constante $V_1$ et $V_2$ afin d'obtenir les deux courbes de modulation souhaitées.

Classiquement, la densité spectrale du signal analysée après Bob contient la fréquence porteuse centrale à $\omega_0$ et une bande latérale unique de fréquence $\omega_0 - \Omega$ ou $\omega_0 + \Omega$ quand le déphasage relatif $|\Phi_A - \Phi_B|$ est égal à 0 ou à $\pi$ respectivement. Le signal contient à la fois $\omega_0 - \Omega$ et $\omega_0 + \Omega$ lorsque la différence de phase relative est égale à $\pm \pi/2$. Les deux oscillateurs $VCO_A$ et $VCO_B$ sont synchronisés par des moyens 17.

Finalement, après Bob un premier filtre spectral de type Fabry-Pérot 7 sélectionne une des deux bandes de modulation, par exemple $\omega_0-\Omega$, laquelle est détectée par un photodétecteur $D_1$, sortie 8. La probabilité $P_1$ de détecter un photon dans cette bande latérale de modulation suit la loi $\sin^2$ en fonction du déphasage relatif $\Delta\Phi = |\Phi_A - \Phi_B|$ comme le montre l'équation 10.

Un circulateur 6 dirige le signal réfléchi par 7 vers un second filtre Fabry-Pérot 10. Ce dernier laisse passer uniquement la seconde bande latérale $\omega_0+\Omega$, laquelle est détectée par un second photodétecteur $D_2$, sortie 11. La probabilité $P_2$ de détecter un photon dans cette bande latérale de modulation suit la loi $\cos^2$ en fonction du déphasage relatif $\Delta\Phi = |\Phi_A - \Phi_B|$ comme le montre l'équation 9. Les deux sorties ont des probabilités de détection complémentaires, ce qui permet d'exploiter le protocole à 4 états, expliqué auparavant. Un compteur 9 est relié à ces deux détecteurs afin d'évaluer le nombre de photons émergeant du système de Bob en fonction de la différence de phase $|\Phi_A - \Phi_B|$. Des moyens informatiques 16 permettent de traiter les données relatives au comptage des photons et à leur instant d'arrivée.

Deuxième mode de réalisation.

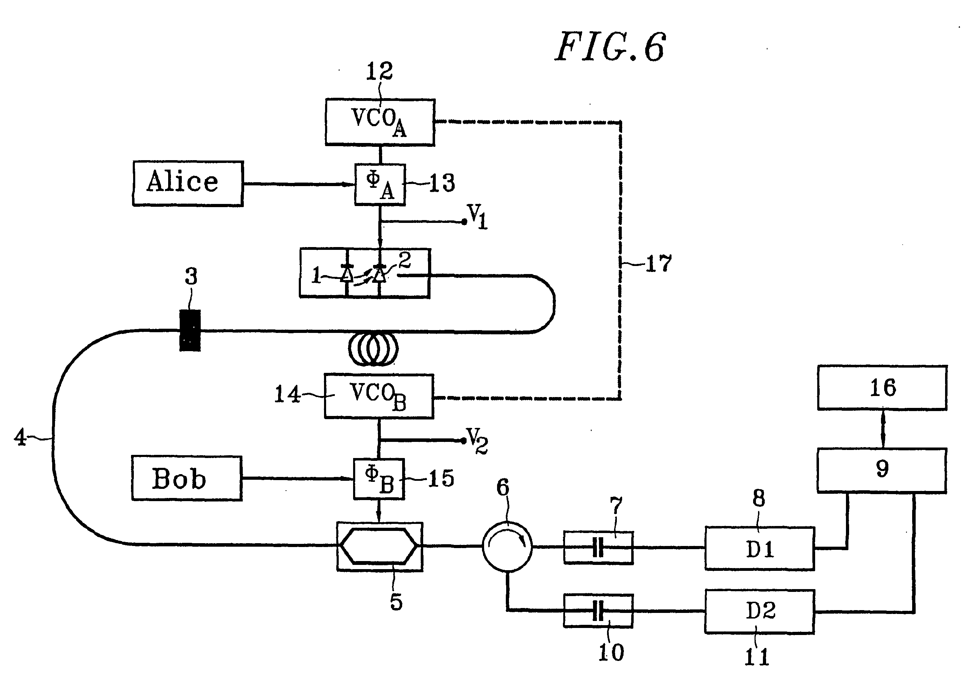

La figure 6 montre un autre mode de réalisation du système de cryptage quantique par BLU avec un modulateur électro-absorbant et un modulateur Mach-Zehnder

La source 1 est une diode laser DFB émettant à 1550 nm. Sa largeur spectrale est de 30 MHz. Le système de modulation d'Alice est un modulateur électro-absorbant 2, identique au précédent. Le canal de transmission 3 est une fibre optique, monomode à 1550 nm, de 30 km de long.

Le système de modulation de Bob 5 est un modulateur Mach-Zehnder intégré sur Niobate de Lithium. Sa tension demi-onde est égale à 5 V, pour une bande passante de 5 GHz et des pertes par insertion de 4 dB.

Comme précédemment, le point de fonctionnement des systèmes de modulation d'Alice 12 et 13 et de Bob 14 et 15 sont ajustés pour obtenir des courbes de modulation $H_A$ et $H_B$ décrites par les équations 9 et 10 à l'aide des tensions continues $V_1$ et $V_2$.

Le filtrage des bandes latérales de modulation est réalisé avec deux interféromètres Fabry-Pérot à fibres 7 et 10 comme dans le cas précédent.

Les éléments 8 et 11 sont des photodiodes à avalanche placées sur chaque sortie du système de modulation de Bob. Un compteur 9 est relié à ces deux détecteurs afin d'évaluer le nombre de photons émergeant du système de Bob en fonction de la différence de phase $|\Phi_A - \Phi_B|$. Des moyens informatiques 16 permettent de traiter les données relatives au comptage des photons et à leur instant d'arrivée.

Cette configuration a été testée de façon classique, c'est à dire en régime non quantique, de manière à savoir si est obtenu après Bob un spectre composé de bandes latérales de modulations dont les intensités varient de façon complémentaire en fonction du déphasage relatif. Cette expérience est réalisée dans les conditions suivantes :

la diode laser émet en continu une puissance optique de 0 dBm. Les deux modulateurs sont contrôlés par des signaux électriques rf (radiofréquence) de fréquence 2,5 GHz. L'amplitude pic-à-pic du signal électrique appliqué sur le modulateur de Bob 5 est de 1V environ correspondant à un taux de modulation $m$= 0,3 rad. Le signal électrique sur le modulateur d'Alice 2 est de 600 mV correspondant à un taux de modulation similaire à celui de Bob. Les VCO d'Alice et Bob sont synchronisés par des moyens 17. Le déphasage relatif est appliqué à l'aide d'un déphaseur contrôlable électriquement ayant une bande passante de 1 MHz. Un des interféromètres Fabry-Pérot est utilisé en mode balayage comme analyseur spectral. Il possède un intervalle spectral libre de 10 GHz pour une finesse de 100.

La figure 4 montre la densité de puissance spectrale du signal à la sortie du système de Bob est représentée pour différentes valeurs du déphasage relatif $\Delta\Phi = |\Phi_A - \Phi_B|$. Chaque bande latérale de modulation est effectivement séparée de la fréquence centrale de 2,5 GHz.

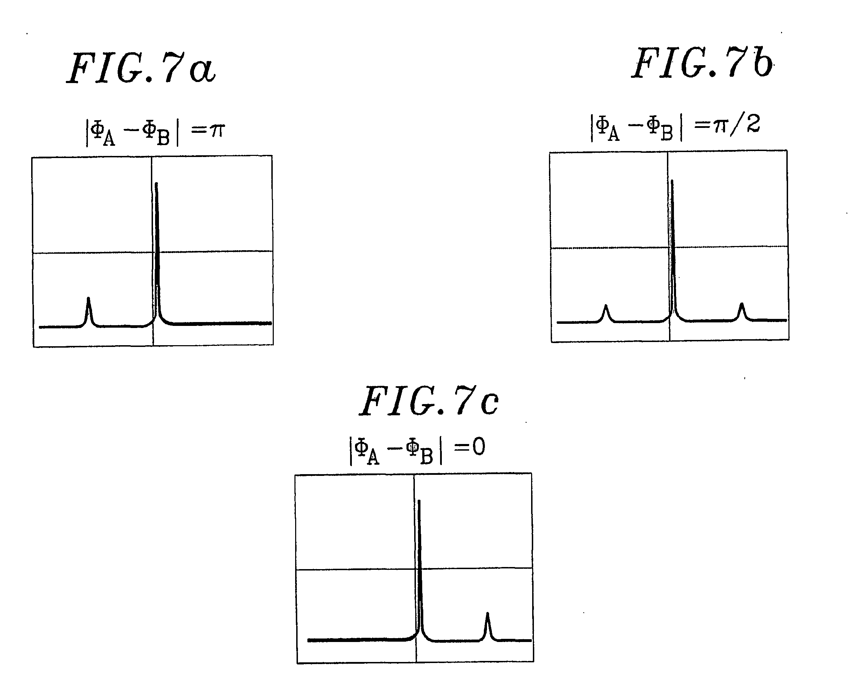

Les figures 7 montre les densités spectrales de puissance expérimentales obtenues avec un interféromètre Fabry-Pérot en balayage pour différentes valeurs du déphasage relatif $\Delta\Phi$ entre Alice et Bob. L'échelle de l'axe horizontal est de 830 MHz par division. L'axe vertical montre l'intensité lumineuse en unité arbitraire.

Sur la figure 7 (a), lorsqu'Alice et Bob sont en opposition de phase, le spectre contient une bande latérale unique correspondant à la fréquence $\omega_0 - \Omega$.

Sur la figure 7 (b), lorsqu'Alice et Bob sont en quadrature de phase, le spectre contient les deux bandes latérales correspondant aux fréquences $\omega_0 \pm \Omega$. Dans ce cas, leur intensité est égale à la moitié de celle de la bande latérale unique précédente.

Sur la figure 7 (c), lorsqu'Alice et Bob sont en phase, le spectre contient l'autre bande latérale unique correspondant à la fréquence $\omega_0 + \Omega$.

Ce système est extrêmement compact, car le modulateur d'Alice et la diode laser sont réalisés dans les dispositifs standards commerciaux sur le même substrat ou wafer, selon la terminologie anglo-saxonne généralement utilisée par l'homme de métier. Ce système possède deux sorties complémentaires, ce qui permet de réaliser une transmission de clés de cryptage avec le protocole à 4 états.

Troisième mode de réalisation.

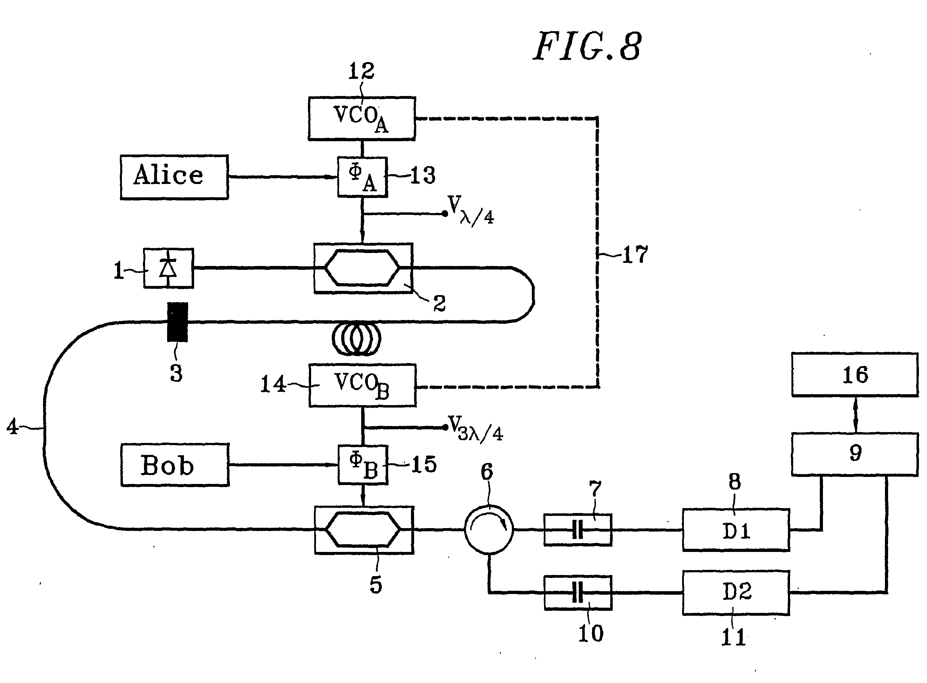

La figure 8 représente un dernier exemple de mode de réalisation du système de cryptage quantique par BLU avec deux modulateurs Mach-Zehnder.

La source 1 est une diode laser impulsionnelle de fréquence centrale $\omega_0$.

Le système d'émission d'Alice est formé d'un modulateur d'intensité intégré sur Niobate de Lithium 2 dont les bras sont déséquilibrés. La différence de marche optique est fixée à $\dfrac{\lambda}{4}$ à l'aide de la tension continue $V_{\frac{\lambda}{4}}$.

La lumière est donc modulée à une fréquence $\Omega \ll \omega_0$ avec une profondeur de modulation $m$ faible. Alice utilise un oscillateur local $VCO_A$ 12 pour générer le signal électrique de modulation à la fréquence $\Omega$ et déphasé par le déphaseur 13 d'une valeur $\Phi_A$ qui est choisie aléatoirement et indépendamment de Bob parmi les 4 valeurs $\left(0, \dfrac{\pi}{2}, \dfrac{-\pi}{2}, \pi\right)$. Les VCO sont synchronisés par des moyens 17.

Alice atténue ensuite le faisceau de manière à obtenir 0,1 photon par impulsion en moyenne pour chaque bande latérale de modulation, à l'aide d'un atténuateur calibré 3.

Le canal de transmission 4 est constitué d'une fibre standard monomode à 1550 nm de 30 km.

Le système de réception de Bob est composé d'un second modulateur d'amplitude intégré sur Niobate de Lithium 5 dont les bras sont déséquilibrés. La différence de marche optique est fixée à $\dfrac{3\lambda}{4}$ à l'aide de la tension continue $V_{\frac{3\lambda}{4}}$.

Dans cette application particulière, la relation de phase donnée dans l'équation 13 se traduit par le fait que la pente de la courbe de modulation du récepteur est opposée à celle d'Alice. Le signal de modulation appliqué sur Bob est généré par un second oscillateur local $VCO_B$ 14 à la même fréquence $\Omega$. Sa phase est fixée à $\left(\Phi_2 + \dfrac{\pi}{2}\right)$ et choisie par le déphaseur 15. Après Bob, le même système de filtrage composé de deux interféromètres Fabry-Pérot fibrés 7 et 10 est mis en place.

Deux types d'expériences ont alors été menés pour vérifier le fonctionnement du dispositif.

La première est réalisée avec une source classique, non atténuée.

La seconde est réalisée en régime quantique c'est à dire avec 0,1 photon par impulsion en moyenne dans chaque bande latérale de modulation.

a) Test en régime classique :

La source 1 est une diode laser DFB émettant à 1550 nm. La diode a une largeur spectrale de 30 MHz. Les modulateurs 2 et 5 sont des modulateurs électro-optiques intégrés sur Niobate de Lithium. Leurs tensions demi-onde sont égales à 5 V, pour une bande passant de 5 GHz et des pertes par insertion de 4 dB. Ils sont pilotés par deux oscillateurs locaux synchronisés émettant un signal rf à 2,5 GHz. Leurs phases $\Phi_1$ et $\Phi_2$ peut être changées à l'aide d'un déphaseur ayant une bande passante de 1 MHz. L'amplitude pic-à-pic des signaux électriques appliqués sur les modulateurs est de 1.6 V correspondant à un taux de modulation m= 0,5 rad. L'un des interféromètres Fabry-Pérot est réglé en mode de balayage de manière à l'utiliser en analyseur de spectre. Sa largeur spectrale et son intervalle spectral libre sont égaux respectivement à 100 MHz et 10 GHz. Ces interféromètres sont des Fabry-Pérot fibrés thermalisés et indépendants de la polarisation. La diode laser émet en continu avec une puissance de 0 dBm. Les pertes globales de ce système de transmission s'élèvent à -10 dB environ (pertes dues à la fibre à raison de -0.2 dB/km, à l'analyseur à hauteur de -2 dB et au modulateur de Bob à hauteur de - 4dB).

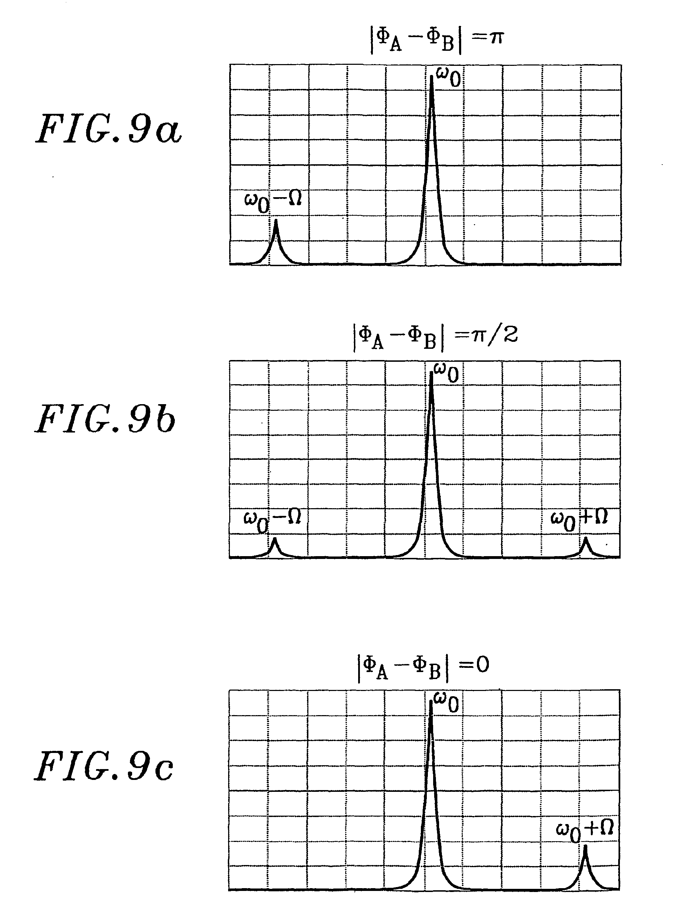

La figure 9 montre les différentes densité spectrales visualisées avec le Fabry-Pérot pour différentes valeurs du déphasage relatif. L'échelle de l'axe horizontal est de 625MHz par division. L'axe vertical montre l'intensité lumineuse en unité arbitraire.

Il apparaît clairement que les bandes latérales de modulation varie encore une fois de la façon souhaitée. Le système peut donc être utilisé pour transmettre une clé de cryptage avec le protocole à 4 états (BB84).

b) Test en régime quantique :

Dans cette configuration, la diode laser DFB génère des impulsions optiques de 5 ns de large avec une cadence de répétition de 1 MHz. Un atténuateur calibré 3 atténue la lumière à la sortie du système de codage d'Alice pour que le nombre moyen de photons par impulsion soit approximativement égal à 0,1 dans chaque bande latérale de modulation. La ligne de transmission est une fibre monomode à 1550 nm de 22 km de long. Les détecteurs 8 et 11 sont des photodiodes à avalanches InGaAs/InP utilisés dans le mode dit « active gating ». Elles sont refroidies à l'aide d'un système hybride azote liquide / module Peltier à la température de -100 ˚C ($\pm 0.2$ ˚C) pour obtenir une efficacité quantique stable. Dans le cas présent, cette efficacité quantique est évaluée à 13 %. Pour tester les performances de ce système, il faut évaluer la visibilité $V$ en régime quantique et le taux quantique d'erreurs binaire ($QBER$). La procédure de détermination de la visibilité est la suivante :

Le nombre d'impulsions électriques générées par les photodiodes à avalanche en réponse aux photons incidents est étudié en fonction du déphasage relatif $\Delta\Phi$. La valeur de $\Delta\Phi$ varie continûment entre 0 et $2\pi$. Pour chaque valeur, le nombre d'impulsions est accumulé sur 1 s. Les coups d'obscurité $n_d$ des photodiodes sont évalués à 8 c/s. Ces coups correspondent à des impulsions parasites induites par les photodiodes en l'absence de lumière.

Un compteur 9 est relié à ces deux détecteurs afin d'évaluer le nombre de photons émergeant du système de Bob en fonction de la différence de phase $|\Phi_A - \Phi_B|$. Des moyens informatiques 16 permettent de traiter les données relatives au comptage des photons et à leur instant d'arrivée.

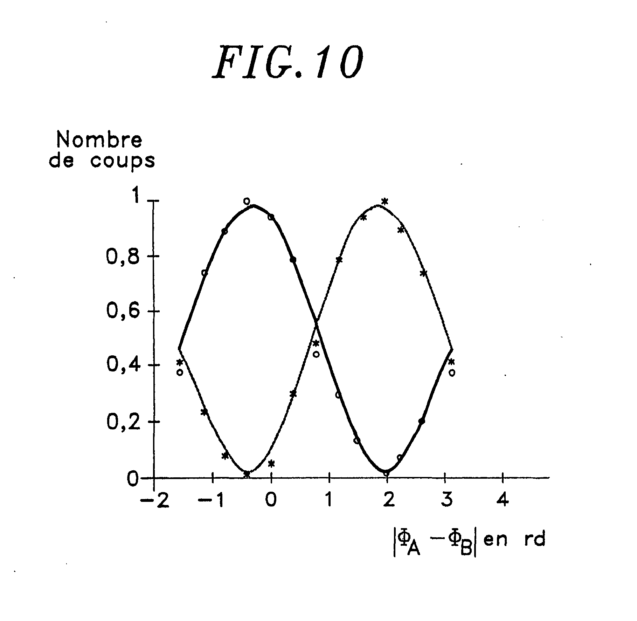

La figure 10 montre le nombre de coups induits par des photons présents dans les bandes latérales de modulation détectés aux sorties 1 et 2 en fonction du déphasage relatif. Les cercles correspondent aux mesures expérimentales obtenues à la sortie 13 de la figure 1. La courbe en trait plein est son approximation en $\sin^2$. Les étoiles correspondent aux mesures expérimentales obtenues à la sortie 14 de la figure 1. La courbe en pointillés est son approximation en $\cos^2$.

La visibilité $V$ des franges d'interférence à un photon ainsi obtenues est de l'ordre de 98 % pour les deux systèmes de franges d'interférence correspondant aux deux sorties complémentaires.

Le taux quantique d'erreurs binaire défini dans l'article [4] dépend fortement de la visibilité $V$ et du nombre de coups d'obscurité $n_d$ des photodiodes :

$$QBER = 2(1-V) + \frac{n_d}{\frac{1}{2}\left(\mu \times \eta \times R \times T \times T_B + 2n_d\right)} \qquad (13)$$

où *T* est l'atténuation due à la fibre (-4 dB sur 20 km de transmission). *$T_B$* est l'atténuation induite par le récepteur de Bob (-4 dB dans le cas présent). *V* est la visibilité obtenue expérimentalement. *R* est la cadence de répétition des impulsions optiques. Le facteur $\dfrac{1}{2}$ est inhérent au protocole BB84. En effet, Alice et Bob ont une chance sur deux de choisir la même base de préparation et d'analyse de photon. Finalement, à partir de l'équation 11, le *QBER* du système tel qu'il est présenté est égale à 7,2 %. Cette valeur est suffisamment faible pour réaliser une distribution quantique de clé de cryptage si le *QBER* limite est évalué à 30 % pour le protocole BB84 (sa valeur limite pour le protocole à 2 états est évalué à 10 %). Lorsque cette valeur limite est atteinte, la sécurité de la clé n'est plus absolue.

En conclusion, le cryptage basée sur la BLU permet de réaliser une transmission quantique de clé de cryptage sur de grandes distances avec un protocole à 4 états. Le degré de sécurité est fortement accru par rapport au système précédent exploitant le protocole à 2 états (demande de brevet français N˚9705573 et demande de brevet européen N˚0 877 508 A1). Les systèmes présentés ont l'avantage d'être compacts et peu sensibles aux instabilités thermiques ou mécaniques car ils permettent d'exploiter la technologie de l'optique intégrée. En outre, ces systèmes peuvent directement être placés sur les réseaux standards de transmission.

Bibliographie

[1] C. H. Bennett, G. Brassard, « Quantum cryptography : Public key distribution and coin tossing », Proceeding of IEEE International on Computers, Systems and Signal Processing, Bangalore, Inde, (IEEE New-York, 1984), pp. 175-179.

[2] C. H. Bennett, « Quantum cryptography using any two non orthogonal states », Physical Review Letters, vol. 68, no 21, pp. 3121-3124, 1992.

[3] voir par exemple : J. Breguet, A. Muller and N. Gisin, « Quantum cryptography with polarized photons in optical fibres », Journal of Modem Optics, vol. 41, no. 12, pp. 2405-2412, 1994.

[4] voir par exemple : P. D. Townsend, « Quantum cryptography on optical fiber networks », Optical Fiber Technology, vol. 4, pp. 345-370, 1998.

G.Ribordy, J. D. Gautier, N. Gisin, O. Guinnard and H. Zbinden, « Fast and friendly quantum key distribution, Journal of Modem Optics, vol.47, no.2/3, pp. 517-531, 2000.

[5] P.C.Sun, Y.Mazurenko et Y.Fainman, "Long distance frequency division interferometer for communication an quantum cryptography", Optics Letters, 20, 9, p1062-1064, 1995.

[6] Y. Mazurenko, J. -M. Merolla, J. -P. Goedgebuer, « Quantum transmission of information with the help of subcarrier frequency. Application to quantum cryptography », Optics and Spectroscopy, vol. 86, no 2, pp. 145-147, 1999.

J. -M. Merolla, Y. Mazurenko, J. -P. Goedgebuer, L. Duraffourg, H. Porte, and W.T. Rhodes, « Quantum cryptography device using single-photon phase modulation », Physical Review A, vol. 60, no 3, pp. 1899-1905, 1999.

J. -M. Merolla, Y. Mazurenko, J. -P. Goedgebuer, and W. T. Rhodes, « Single-Photon interference of phase-modulated light for quantum cryptography », Physical Review Letters, vol. 82, no 8, p 1656, 1999.

J. -M. Merolla, Y. Mazurenko, J. -P. Goedgebuer, H. Porte, and W. T. Rhodes, « Phase-modulation transmission system for quantum cryptography », Optics Letters, vol. 24, no 2, p 104, 1999.

[7] G. H. Smith, D. Novak and Z. Amhed, « Technique for optical SSB generation to overcome dispersion penalties in fibre-ratio systems », Electronics Letters, vol. 33, no. 1, pp. 74-75, 1997.

**Revendications**

**1.** Système de transmission optique de code binaire comportant un émetteur, un récepteur et une ligne de transmission qui s'étend entre ledit émetteur et ledit récepteur,
l'émetteur (A) comportant :

- des moyens pour la génération d'un faisceau lumineux (1) modulé en amplitude selon une modulation de fréquence donnée qui fait apparaître pour ledit faisceau lumineux un mode central, ainsi qu'un premier et un deuxième modes latéraux,
- des moyens de déphasage (8) pour imposer à la modulation un déphasage qui est fonction du code binaire à transmettre,
- des moyens pour atténuer l'intensité du faisceau lumineux modulé de telle sorte que l'intensité des modes latéraux soit suffisamment faible pour qu'il n'existe au maximum qu'un seul photon dans les modes latéraux,

le récepteur (B) comportant :

- des moyens pour moduler le signal lumineux reçu par une modulation synchrone avec la modulation à l'émission en l'absence de déphasage,
- des moyens pour imposer à cette modulation un déphasage aléatoirement (9) choisi égal à l'une ou l'autre des valeurs de déphasage susceptibles d'être imposées à l'émission,
- des moyens pour détecter la présence d'un photon dans les modes latéraux après modulation du signal lumineux reçu,

**caractérisé en ce que**

- les moyens de déphasage (8) de l'émetteur impose un déphasage qui est choisi aléatoirement égal à 0 ou $\pi$/2 pour une première valeur de bit ou à $\pi$ ou $3\pi/2$ pour une deuxième valeur de bit,

**et en ce que**

- les moyens de détection du récepteur (11, 12) comportent des moyens pour détecter la présence d'un photon dans le premier mode latéral, ainsi que des moyens pour détecter la présence d'un photon dans le deuxième mode latéral, une première valeur de bit étant détectée lorsque la présence d'un photon est détectée pour le premier mode latéral, une deuxième valeur de bit étant détectée lorsque la présence d'un photon est détectée pour le deuxième mode latéral.

2.  Système selon la revendication 1, **caractérisé en ce que** l'émetteur (A) comporte,

    - une source lumineuse (1) pour générer un faisceau lumineux d'intensité et de pulsation ($\omega_0$) données,
    - des moyens (6) pour produire un premier signal électrique de modulation d'amplitude,
    - des moyens (8) aptes déphaser ce premier signal électrique de modulation d'une phase ($\Phi_A$),
    - des moyens (2) pour moduler le faisceau lumineux par ce premier signal électrique déphasé,

    et le récepteur (B) comporte,

    - des moyens (7) pour produire un second signal électrique de modulation,
    - des moyens (9) pour donner à ce second signal électrique de modulation une seconde phase ($\Phi_B$) choisie aléatoirement et indépendamment de ($\Phi_A$),
    - des moyens (4) pour moduler le faisceau lumineux reçu par le signal électrique modulé.

3.  Système selon la revendication 1, **caractérisé en ce que** les moyens de détection de chaque sortie (11, 12) comportent des moyens formant filtre (15, 16) et un photodétecteur à un photon.

4.  Système selon la revendication 3, **caractérisé en ce que** les moyens formant filtre comportent au moins un spectromètre de type Fabry-Pérot.

5.  Système selon la revendication 1, **caractérisé en ce que** les moyens atténuateur (2') atténuent l'intensité lumineuse du faisceau modulé pour qu'il n'y ait en moyenne au maximum de 0.1 photon par impulsion dans chaque bande latérale de modulation.

6.  Système selon la revendication 1, **caractérisé en ce qu'**il comporte en outre des moyens (13) permettant de mettre en synchronisme les deux signaux électriques de modulation.

7.  Emetteur (A) d'un système selon l'une des revendications 1 à 6, **caractérisé en ce qu'**il comporte :

    - des moyens pour la génération d'un faisceau lumineux (1) modulé en amplitude qui fait apparaître pour ledit faisceau lumineux un mode central, ainsi qu'un premier et un deuxième mode latéral,
    - des moyens de déphasage (8) pour imposer à la modulation un déphasage qui est fonction du code binaire à transmettre, ce déphasage étant choisi aléatoirement égal à 0 ou $\pi$/2 pour une première valeur de bit ou à $\pi$

ou 3π/2 pour une deuxième valeur de bit,
- des moyens pour atténuer l'intensité du faisceau lumineux modulé de telle sorte que l'intensité des modes latéraux soit suffisamment faible pour qu'il n'existe au maximum qu'un seul photon par impulsion dans les modes latéraux.

8. Récepteur (B) d'un système selon l'une des revendications 1 à 6, **caractérisé en ce qu'**il comporte :

- des moyens pour moduler le signal lumineux reçu par une modulation synchrone avec la modulation à l'émission en l'absence de déphasage,
- des moyens pour imposer à cette modulation un déphasage aléatoirement (9) choisi égal à l'une ou l'autre des valeurs de déphasage susceptibles d'être imposées à l'émission,
- des moyens (11, 12) pour détecter la présence d'un photon dans les modes latéraux après modulation du signal lumineux reçu, avec des moyens détectant la présence d'un photon dans le premier mode latéral, ainsi que des moyens détectant la présence d'un photon dans le deuxième mode latéral, une première valeur de bit étant détectée lorsque la présence d'un photon est détectée pour le premier mode latéral, une deuxième valeur de bit étant détectée lorsque la présence d'un photon est détectée pour le deuxième mode latéral.

9. Procédé de transmission optique de code binaire entre un expéditeur et un destinataire selon lequel, l'expéditeur (A).

- génère un faisceau lumineux modulé en amplitude qui fait apparaître pour ledit faisceau lumineux un mode central, ainsi qu'un premier et un deuxième mode latéral,
- impose à la modulation un déphasage qui est fonction du code binaire à transmettre,
- atténue l'intensité du faisceau lumineux modulé de telle sorte que l'intensité des modes latéraux soit suffisamment faible pour qu'il n'existe au maximum qu'un seul photon par impulsion dans les modes latéraux,

le destinataire (B).

- module le signal lumineux reçu par une modulation synchrone avec la modulation à l'émission en l'absence de déphasage,
- impose à cette modulation un déphasage aléatoirement choisi égal à l'une ou l'autre des valeurs de déphasage susceptibles d'être imposées à l'émission,
- détecte la présence d'un photon dans les modes latéraux après modulation du signal lumineux reçu,

**caractérisé en ce que**
l'expéditeur impose un déphasage qui est choisi aléatoirement égal à 0 ou π/2 pour une première valeur de bit ou à π ou 3π/2 pour une deuxième valeur de bit,
**en ce que**
le destinataire détecte la présence d'un photon dans le premier mode latéral, ainsi que la présence d'un photon dans le deuxième mode latéral, une première valeur de bit étant détectée lorsque la présence d'un photon est détectée pour le premier mode latéral, une deuxième valeur de bit étant détectée lorsque la présence d'un photon est détectée pour le deuxième mode latéral ;
**et en ce que**
l'expéditeur et le destinataire sacrifient, en les comparant, une partie des valeurs des bits transmis pour détecter les erreurs induites par une mauvaise transmission ou une écoute intempestive de la part
d'un espion sur la ligne de transmission.

10. Procédé selon la revendication 9, **caractérisé en ce que** l'expéditeur et le destinataire mettent en synchronisme leurs signaux électriques de modulation.

**Claims**

1. Binary code optical transmission system comprising a transmitter, a receiver and a transmission line which extends between said transmitter and said receiver, the transmitter (A) comprising:

- means for generating a light beam (1) amplitude modulated according to a given frequency modulation which reveals for said light beam a central mode, and a first and a second side modes,

- phase-shifting means (8) for imposing on the modulation a phase shift which is a function of the binary code to be transmitted,
- means for attenuating the intensity of the modulated light beam so that the intensity of the side modes is weak enough for there to be at most only a single photon in the side modes,

the receiver (B) comprising:

- means for modulating the received light signal by means of a modulation synchronous with the modulation on transmission in the absence of phase shift,
- means for imposing on this modulation a randomly chosen phase shift (9) equal to one or other of the phase shift values likely to be imposed on transmission,
- means for detecting the presence of a photon in the side modes after modulation of the received light signal,

**characterized in that**

- the phase-shifting means (8) of the transmitter impose a phase shift that is chosen randomly to be equal to 0 or $\pi/2$ for a first bit value or to $\pi$ or $3\pi/2$ for a second bit value,

**and in that**

- the detection means of the receiver (11, 12) comprise means for detecting the presence of a photon in the first side mode, and means for detecting the presence of a photon in the second side mode, a first bit value being detected when the presence of a photon is detected for the first side mode, a second bit value being detected when the presence of a photon is detected for the second side mode.

2. System according to Claim 1, **characterized in that** the transmitter (A) comprises,

- a light source (1) for generating a light beam of given intensity and pulsing ($\omega_0$),
- means (6) for producing a first amplitude modulating electrical signal,
- means (8) able to phase-shift this first modulating electrical signal by a phase ($\Phi_A$),
- means (2) for modulating the light beam by this first phase-shifted electrical signal,

and the receiver (B) comprises,

- means (7) for producing a second modulating electrical signal,
- means (9) for giving this second electrical modulation signal a second phase ($\Phi_B$) chosen randomly and independently of ($\Phi_A$),
- means (4) for modulating the received light beam by the modulated electrical signal.

3. System according to Claim 1, **characterized in that** the detection means of each output (11, 12) comprise filter-forming means (15, 16) and a single-photon photo detector.

4. System according to Claim 3, **characterized in that** the filter-forming means comprise at least a Fabry-Pérot type spectrometer.

5. System according to Claim 1, **characterized in that** the attenuating means (2') attenuate the light intensity of the modulated beam so that it has on average a maximum of 0.1 photon per pulse in each modulation side band.

6. System according to Claim 1, **characterized in that** it also comprises means (13) making it possible to place the two modulating electrical signals in synchronism.

7. Transmitter (A) of a system according to one of Claims 1 to 6, **characterized in that** it comprises:

- means for generating an amplitude-modulated light beam (1), such modulation revealing, for said light beam, a central mode, and a first and a second side modes,
- phase-shifting means (8) for imposing on the modulation a phase shift which is a function of the binary code to be transmitted, this phase shift being chosen randomly to be equal to 0 or $\pi/2$ for a first value or to $\pi$ or $3\pi/2$ for a second bit value,

- means for attenuating the intensity of the modulated light beam so that the intensity of the side modes is weak enough for there to be at most only a single photon per pulse in the side modes.

8. Receiver (B) of a system according to one of Claims 1 to 6, **characterized in that** it comprises:

- means for modulating the received light signal by means of a modulation synchronous with the modulation on transmission in the absence of phase shift,
- means for imposing on this modulation a randomly chosen phase shift (5) equal to one or other of the phase shift values likely to be imposed on transmission,
- means (11, 12) for detecting the presence of a photon in the side modes after modulation of the received light signal, with means detecting the presence of a photon in the first side mode, and means detecting the presence of a photon in the second side mode, a first bit value being detected when the presence of a photon is detected for the first side mode, a second bit value being detected when the presence of a photon is detected for the second side mode.

9. Method of optically transmitting binary code between a sender and a recipient, according to which, the sender (A):

- generates an amplitude-modulated light beam, such modulation revealing for said light beam a central mode, and a first and a second side modes,
- imposes on the modulation a phase shift which is a function of the binary code to be transmitted,
- attenuates the intensity of the modulated light beam so that the intensity of the side modes is weak enough for there to be at most only a single photon per pulse in the side modes,

the recipient (B):

- modulates the received light signal by means of a modulation synchronous with the modulation on transmission in the absence of phase shift,
- imposes on this modulation a randomly chosen phase shift equal to one or other of the phase shift values likely to be imposed on transmission,
- detects the presence of a photon in the side modes after modulation of the received light signal,

**characterized in that**
the sender imposes a phase shift that is randomly chosen to be equal to 0 or $\pi/2$ for a first bit value or to $\pi$ or $3\pi/2$ for a second bit value,
**in that**
the recipient detects the presence of a photon in the first side mode, and the presence of a photon in the second side mode, a first bit value being detected when the presence of a photon is detected for the first side mode, a second bit value being detected when the presence of a photon is detected for the second side mode;
**and in that**
the sender and the recipient sacrifice, by comparing them, a portion of the values of the bits transmitted to detect the errors induced by a bad transmission or inopportune listening on the part of a spy on the transmission line.

10. Method according to Claim 9, **characterized in that** the sender and the recipient place their modulating electrical signals in synchronism.

**Patentansprüche**

1. System zur optischen Übertragung eines Binärcodes, das einen Sender, einen Empfänger und eine Übertragungsleitung aufweist, die sich zwischen dem Sender und dem Empfänger erstreckt, wobei der Sender (A) aufweist:

- Einrichtungen zur Erzeugung eines Lichtstrahls (1), der gemäß einer gegebenen Frequenzmodulation amplitudenmoduliert ist, die für den Lichtstrahl einen zentralen Modus sowie einen ersten und einen zweiten Seitenmodus auftreten lässt,
- Phasenverschiebungseinrichtungen (8), um der Modulation eine Phasenverschiebung vorzugeben, die vom zu übertragenden Binärcode abhängt,
- Einrichtungen, um die Intensität des modulierten Lichtstrahls derart zu dämpfen, dass die Intensität der Seitenmodi schwach genug ist, damit es maximal nur ein einziges Photon in den Seitenmodi gibt,

wobei der Empfänger (B) aufweist:

- Einrichtungen, um das empfangene Lichtsignal mit einer Modulation zu modulieren, die mit der Modulation beim Senden in Abwesenheit einer Phasenverschiebung synchron ist,
- Einrichtungen, um dieser Modulation eine Phasenverschiebung vorzugeben, die zufällig (9) gleich dem einen oder dem anderen der Phasenverschiebungswerte gewählt wird, die beim Senden vorgegeben werden können,
- Einrichtungen, um das Vorhandensein eines Photons in den Seitenmodi nach Modulation des empfangenen Lichtsignals zu erfassen,

**dadurch gekennzeichnet, dass**

- die Phasenverschiebungseinrichtungen (8) des Senders eine Phasenverschiebung vorgeben, die zufällig gleich 0 oder $\pi/2$ für einen ersten Bitwert oder gleich $\pi$ oder $3\pi/2$ für einen zweiten Bitwert gewählt wird,

und dass

- die Erfassungseinrichtungen des Empfängers (11, 12) Einrichtungen zur Erfassung des Vorhandenseins eines Photons im ersten Seitenmodus sowie Einrichtungen zur Erfassung des Vorhandenseins eines Photons im zweiten Seitenmodus aufweisen, wobei ein erster Bitwert erfasst wird, wenn das Vorhandensein eines Photons für den ersten Seitenmodus erfasst wird, während ein zweiter Bitwert erfasst wird, wenn das Vorhandensein eines Photons für den zweiten Seitenmodus erfasst wird.

2. System nach Anspruch 1, **dadurch gekennzeichnet, dass** der Sender (A) aufweist,

- eine Lichtquelle (1), um einen Lichtstrahl mit gegebener Intensität und Pulsation ($\omega_0$) zu erzeugen,
- Einrichtungen (6), um ein erstes elektrisches Amplitudenmodulationssignal zu erzeugen,
- Einrichtungen (8), die dieses erste elektrische Modulationssignal um eine Phase ($\Phi_A$) phasenverschieben können,
- Einrichtungen (2), um den Lichtstrahl mit diesem ersten phasenverschobenen elektrischen Signal zu modulieren,

und der Empfänger (B) aufweist,

- Einrichtungen (7), um ein zweites elektrisches Modulationssignal zu erzeugen,
- Einrichtungen (9), um diesem zweiten elektrischen Modulationssignal eine zufällig und unabhängig von ($\Phi_A$) gewählte zweite Phase ($\Phi_B$) zu verleihen,
- Einrichtungen (4), um den empfangenen Lichtstrahl mit dem modulierten elektrischen Signal zu modulieren.

3. System nach Anspruch 1, **dadurch gekennzeichnet, dass** die Erfassungseinrichtungen (11, 12) jedes Ausgangs ein Filter (15, 16) bildende Einrichtungen und einen Single-Photon-Fotodetektor aufweisen.

4. System nach Anspruch 3, **dadurch gekennzeichnet, dass** die ein Filter bildenden Einrichtungen mindestens ein Spektrometer vom Typ Fabry-Pérot aufweisen.

5. System nach Anspruch 1, **dadurch gekennzeichnet, dass** die Dämpfungseinrichtungen (2') die Lichtstärke des modulierten Strahls dämpfen, damit es im Mittel maximal nur 0,1 Photon pro Impuls in jedem Modulationsseitenband gibt.

6. System nach Anspruch 1, **dadurch gekennzeichnet, dass** es außerdem Einrichtungen (13) aufweist, die es ermöglichen, die zwei elektrischen Modulationssignale zu synchronisieren.

7. Sender (A) eines Systems nach einem der Ansprüche 1 bis 6, **dadurch gekennzeichnet, dass** er aufweist:

- Einrichtungen zur Erzeugung eines amplitudenmodulierten Lichtstrahls (1), wobei die Modulation für den Lichtstrahl einen zentralen Modus sowie einen ersten und einen zweiten Seitenmodus auftreten lässt,
- Phasenverschiebungseinrichtungen (8), um der Modulation eine Phasenverschiebung vorzugeben, die vom zu übertragenden Binärcode abhängt, wobei diese Phasenverschiebung zufällig gleich 0 oder $\pi/2$ für einen ersten Bitwert oder gleich $\pi$ oder $3\pi/2$ für einen zweiten Bitwert gewählt wird,

- Einrichtungen, um die Intensität des modulierten Lichtstrahls derart zu dämpfen, dass die Intensität der Seitenmodi schwach genug ist, damit es maximal nur ein einziges Photon pro Impuls in den Seitenmodi gibt.

8. Empfänger (B) eines Systems nach einem der Ansprüche 1 bis 6, **dadurch gekennzeichnet, dass** er aufweist:

- Einrichtungen, um das empfangene Lichtsignal mit einer Modulation zu modulieren, die synchron mit der Modulation beim Senden in Abwesenheit einer Phasenverschiebung ist,
- Einrichtungen, um dieser Modulation eine Phasenverschiebung vorzugeben, die zufällig (9) gleich dem einen oder dem anderen Phasenverschiebungswert gewählt wird, die beim Senden vorgegeben werden können,
- Einrichtungen (11, 12), um das Vorhandensein eines Photons in den Seitenmodi nach der Modulation des empfangenen Lichtsignals zu erfassen, mit Einrichtungen, die das Vorhandensein eines Photons im ersten Seitenmodus erfassen, sowie mit Einrichtungen, die das Vorhandensein eines Photons im zweiten Seitenmodus erfassen, wobei ein erster Bitwert erfasst wird, wenn das Vorhandensein eines Photons für den ersten Seitenmodus erfasst wird, während ein zweiter Bitwert erfasst wird, wenn das Vorhandensein eines Photons für den zweiten Seitenmodus erfasst wird.

9. Verfahren zur optischen Übertragung eines Binärcodes zwischen einem Absender und einem Empfänger, gemäß dem, der Absender (A)

- einen amplitudenmodulierten Lichtstrahl erzeugt, wobei die Modulation für den Lichtstrahl einen zentralen Modus sowie einen ersten und einen zweiten Seitenmodus auftreten lässt,
- der Modulation eine Phasenverschiebung vorgibt, die vom zu übertragenden Binärcode abhängt,
- die Intensität des modulierten Lichtstrahls derart dämpft, dass die Intensität der Seitenmodi schwach genug ist, damit es maximal nur ein einziges Photon pro Impuls in den Seitenmodi gibt,

der Empfänger (B)

- das empfangene Lichtsignal mit einer Modulation moduliert, die synchron mit der Modulation beim Senden in Abwesenheit einer Phasenverschiebung ist,
- dieser Modulation eine Phasenverschiebung vorgibt, die zufällig gleich dem einen oder dem anderen der Phasenverschiebungswerte gewählt wird, die beim Senden vorgegeben werden können,
- das Vorhandensein eines Photons in den Seitenmodi nach Modulation des empfangenen Lichtsignals erfasst,

**dadurch gekennzeichnet, dass**
der Absender eine Phasenverschiebung vorgibt, die zufällig gleich 0 oder $\pi/2$ für einen ersten Bitwert oder gleich $\pi$ oder $3\pi/2$ für einen zweiten Bitwert gewählt wird,
dass
der Empfänger das Vorhandensein eines Photons im ersten Seitenmodus sowie das Vorhandensein eines Photons im zweiten Seitenmodus erfasst, wobei ein erster Bitwert erfasst wird, wenn das Vorhandensein eines Photons für den ersten Seitenmodus erfasst wird, während ein zweiter Bitwert erfasst wird, wenn das Vorhandensein eines Photons für den zweiten Seitenmodus erfasst wird;
und dass
der Absender und der Empfänger einen Teil der Werte der übertragenen Bits opfern, indem sie sie vergleichen, um die Fehler zu erfassen, die durch eine schlechte Übertragung oder ein unerwünschtes Abhören durch einen Spion auf der Übertragungsleitung induziert werden.

10. Verfahren nach Anspruch 9, **dadurch gekennzeichnet, dass** der Absender und der Empfänger ihre elektrischen Modulationssignale synchronisieren.

FIG.1

FIG.2

FIG.3

$\Psi_A - \Phi_A$   $\Psi_A + \Phi_A$

$\Psi_B - \Phi_B$   $\Psi_B + \Phi_B$

$\omega_0 - \Omega$   $\omega_0$   $\omega_0 + \Omega$

$\omega_0 - \Omega$   $\omega_0$   $\omega_0 + \Omega$

FIG.4a

$|\Phi_A - \Phi_B| = 0$

$\omega_0$   $\omega_0 + \Omega$

FIG.4b

$|\Phi_A - \Phi_B| = \pi$

$\omega_0 - \Omega$   $\omega_0$

FIG.4c

$|\Phi_A - \Phi_B| = \pi/2$

$\omega_0 - \Omega$   $\omega_0$   $\omega_0 + \Omega$

EP 1 342 337 B1

# FIG.5

*FIG.6*

## FIG.7b

$|\Phi_A - \Phi_B| = \pi/2$

## FIG.7c

$|\Phi_A - \Phi_B| = 0$

## FIG.7a

$|\Phi_A - \Phi_B| = \pi$

## FIG.8

$$\left|\Phi_A-\Phi_B\right|=\pi$$

FIG.9a

$$\left|\Phi_A-\Phi_B\right|=\pi/2$$

FIG.9b

$$\left|\Phi_A-\Phi_B\right|=0$$

FIG.9c

# FIG.10

Nombre
de coups

EP 1 342 337 B1

## RÉFÉRENCES CITÉES DANS LA DESCRIPTION

**Documents brevets cités dans la description**

- US 5307410 A
- FR 9705573
- EP 0877508 A1

**Littérature non-brevet citée dans la description**

- **C. H. Bennett ; G. Brassard.** Quantum cryptography : Public key distribution and coin tossing. *Proceeding of IEEE International on Computers, Systems and Signal Processing, Bangalore,* 1984, 175-179
- **C. H. Bennett.** Quantum cryptography using any two non orthogonal states. *Physical Review Letters,* 1992, vol. 68 (21), 3121-3124
- **J. Breguet ; A. Muller ; N. Gisin.** Quantum cryptography with polarized photons in optical fibres. *Journal of Modem Optics,* 1994, vol. 41 (12), 2405-2412
- **P. D. Townsend.** Quantum cryptography on optical fiber networks. *Optical Fiber Technology,* 1998, vol. 4, 345-370
- **G. Ribordy ; J. D. Gautier ; N. Gisin ; O. Guinnard ; H. Zbinden.** Fast and friendly quantum key distribution. *Journal of Modem Optics,* 2000, vol. 47 (2/3), 517-531
- **P. C. Sun ; Y. Mazurenko ; Y. Fainman.** Long distance frequency division interferometer for communication an quantum cryptography. *Optics Letters,* vol. 20 (9), 1062-1064
- **Y. Mazurenko ; J.-M. Merolla ; J.-P. Goedgebuer.** Quantum transmission of information with the help of subcarrier frequency. Application to quantum cryptography. *Optics and Spectroscopy,* 1999, vol. 86 (2), 145-147
- **J.-M. Merolla ; Y. Mazurenko ; J.-P. Goedgebuer ; L. Duraffourg ; H. Porte ; W.T. Rhodes.** Quantum cryptography device using single-photon phase modulation. *Physical Review A,* 1999, vol. 60 (3), 1899-1905
- **J.-M. Merolla ; Y. Mazurenko ; J.-P. Goedgebuer ; W. T. Rhodes.** Single-Photon interference of phase-modulated light for quantum cryptography. *Physical Review Letters,* 1999, vol. 82 (8), 1656
- **J.-M. Merolla ; Y. Mazurenko ; J.-P. Goedgebuer ; H. Porte ; W. T. Rhodes.** Phase-modulation transmission system for quantum cryptography. *Optics Letters,* 1999, vol. 24 (2), 104
- **G. H. Smith ; D. Novak ; Z. Amhed.** Technique for optical SSB generation to overcome dispersion penalties in fibre-ratio systems. *Electronics Letters,* 1997, vol. 33 (1), 74-75